# EUROPEAN PATENT SPECIFICATION

(11) **EP 0 372 921 B1**
(45) Date of publication and mention of the grant of the patent: **08.06.1994**
(21) Application number: 89312701.9
(22) Date of filing: 06.12.1989
(51) Int. Cl.: B29D 30/06

(54) **Method for vulcanising elastomer products and apparatus therefor**
Verfahren und Vorrichtung zum Vulkanisieren von Elastomer-Produkten
Procédé et dispositif pour la vulcanisation de produits élastomères

(30) Priority: 08.12.1988 JP 311332/88; 08.12.1988 JP 311333/88
(43) Date of publication of application: 13.06.1990
(73) Proprietor: SUMITOMO RUBBER INDUSTRIES LIMITED, Kobe-shi Hyogo-ken (JP); MITSUBISHI JUKOGYO KABUSHIKI KAISHA, Tokyo (JP)
(72) Inventor: Soeda, Koji, Kobe-shi Hyogo-ken (JP); Okamoto, Shoji, Toyota-shi Aichi-ken (JP); Kubota, Yoshiya, Toyota-shi Aichi-ken (JP); Kubota, Akinori, Kobe-shi Hyogo-ken (JP); Kobayashi, Michihito, Toyota-shi Aichi-ken (JP); Irie, Nobuhiko Nagasaki Shipyard & Engine Works, Nagasaki-shi Nagasaki-ken (JP); Katayama, Hideaki Nagasaki Shipyard & Engine Works, Nagasaki-shi Nagasaki-ken (JP); Sakaguchi, Katsuyoshi, Nagasaki-shi Nagasaki-ken (JP); Ijiri, Masaaki, Aichi-gun Aichi-ken (JP); Hasegawa, Akira Nagasaki Shipyard & Engine Works, Nagasaki-shi Nagasaki-ken (JP); Murakami, Toshifumi, Nagasaki-shi Nagasaki-ken (JP)
(74) Representative: Stewart, Charles Geoffrey

(56) References cited:
- EP-A- 0 323 164
- DE-A- 3 813 450
- GB-A- 2 120 967
- US-A- 2 997 740

## Description

The present invention relates to a method for vulcanising elastomer products and an apparatus used therefor.

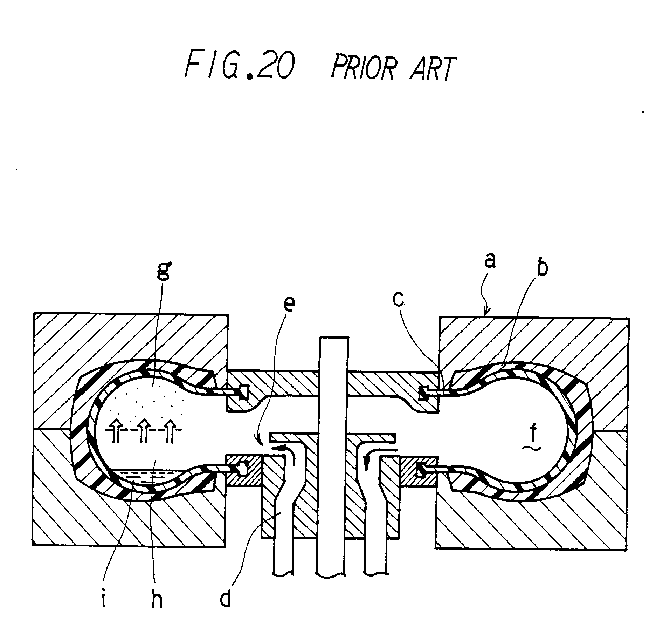

Hitherto, as a method for vulcanising elastomer articles such as an automobile tyre with a gas as a heat and pressure providing medium using a vulcanising apparatus with a bladder, there has been employed the method shown in Figure 20. The article (an automobile tyre (b) in the example shown in the drawing) is placed in a mould (a) and a bladder (c) is inflated by a supply of internal pressure for shaping. After the shape of the tyre (b) becomes similar to the inside shape of the mould (a), the mould (a) is closed. Then, steam as a heating medium is blown and supplied from a supply opening (e), which is formed at the centre of the vulcanising apparatus and communicates with a supply passage (d), in the horizontal direction from a lower position at the centre of the vulcanising chamber into an inner space (f) of the vulcanising chamber, so that the tyre (b) is heated and pressurised. When the temperature of the tyre (b) reaches a prespecified temperature or after a prespecified period of time, the steam supply is stopped and then inert gas such as burning gas, nitrogen gas or the like as a pressurising medium at a pressure not lower than the steam pressure is supplied, until the remaining period in the heating step expires. Once again the supply of gas is in the horizontal direction from the same supply opening (e) or in the horizontal direction from another supply opening, which is formed for the pressurising medium exclusive at the same height as the supply opening (e) for steam and communicates with the same or another supply passage, into the inner space (f) of the vulcanising chamber, so that the temperature of the tyre (b) is maintained at the prespecified temperature by the inert gas.

However, because in the above-mentioned prior art apparatus, the steam is blown from the lower position at the centre of the vulcanising chamber along the horizontal direction, water due to the condensation of steam is accumulated in the lower zone on the bottom surface of the tyre (b) without being discharged, and as a result heating of the lower sidewall is obstructed. An increase of internal pressure causes a decrease of steam inflow, and thereby internal steam flow is weakened. When the internal steam flow velocity is reduced to approximately zero, wet steam forms water droplets and falls downwardly, while other steam which maintains the superheated condition rises upwardly because of its relatively smaller specific gravity. This results in a temperature gradient in the vertical direction in the tyre (b). Further, since the pressurising gas (inert gas) having a lower temperature than the steam is blown, the same as the steam, from a nozzle located at the lower position in the tyre horizontally toward the lower portion of the tyre, the portion to which the gas is directed (.e. the lower bead portion and the like) is cooled to a lower temperature. Moreover, in a condition wherein the pressurising gas inflow ceases due to an increase of the internal pressure and accordingly internal flow of the pressurising gas ceases, the pressurising gas having a larger specific gravity than steam is apt to accumulate in the lower portion of the inner space (f) of the tyre and consequently the temperature of the lower portion such as the lower sidewall and the lower bead portion in contact with the pressurising gas of the lower temperature is lowered.

On the other hand, the remaining steam accumulates in the upper portion of the inner space (f) and is subjected to adiabatic compression, although it only lasts for a short period, because of the pressurising gas introduced at a higher pressure, and therefore the steam temperature rises despite the lower temperature of the pressurising gas and the upper sidewall is thus heated to a higher temperature.

Thus, in the inner space (f) of the tyre there are formed an upper layer (g) mainly comprising steam, a lower layer (h) mainly comprising the pressurising gas, and a lowest bottom layer (i) of steam condensate.

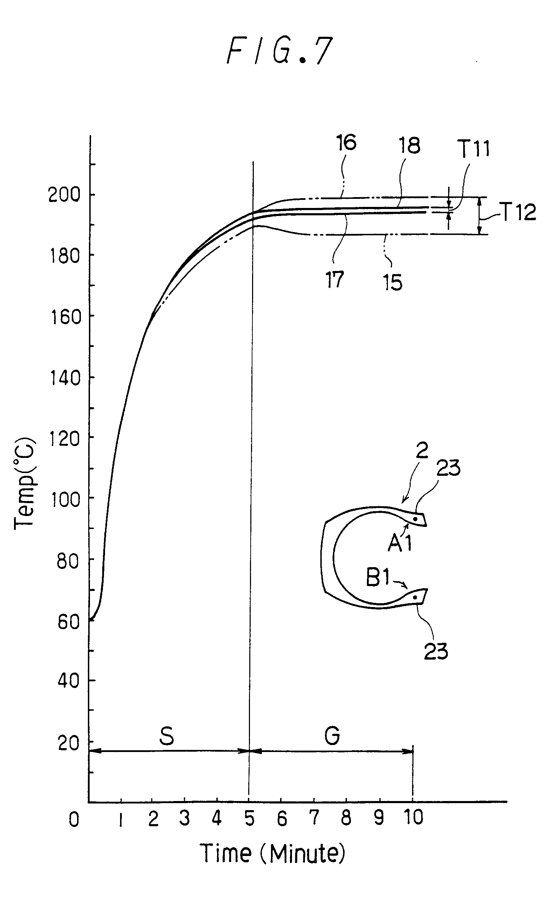

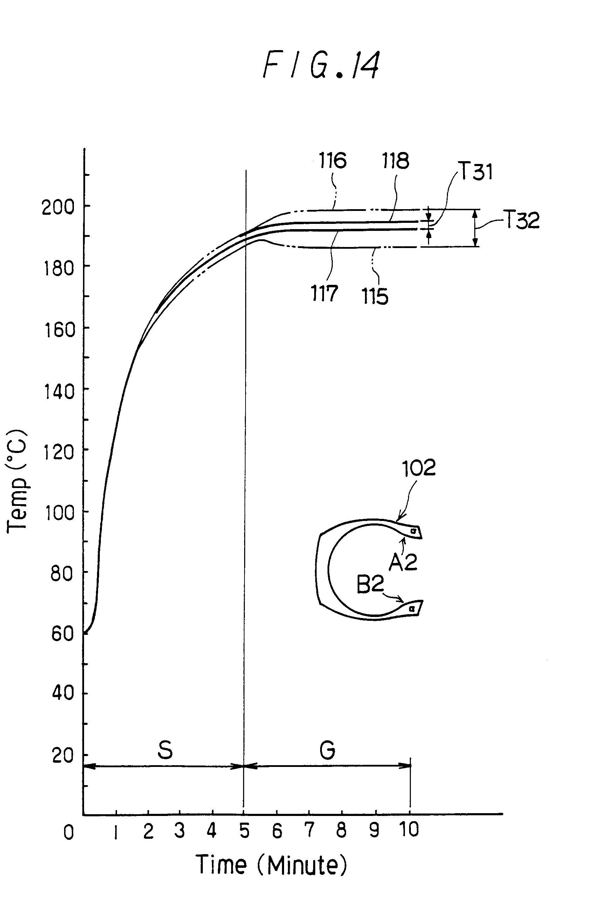

Accordingly, the inside temperature of the tyre (b) changes as shown by the broken lines in Figure 7, Figure 8, Figure 14 and Figure 15. That is, with regard to a point (A1) and point (A2) at the upper bead portion of the tyre the temperature after the introduction of the pressurising gas tends to rise as shown by the broken line 16 and the broken line 116 respectively in Figure 7 and Figure 14. However, on the contrary, with regard to a point (B1) and a point (B2) at the lower bead portion of the tyre the temperature after the introduction of the pressurising gas tend to fall as shown by the broken line 15 and the broken line 115 respectively in Figure 7 and Figure 14. This results in a large temperature difference (T₁₂) (e.g. 13 degrees C) between the point (A1) and the point (B1) and a large temperature difference (T₃₂) (e.g. 13 degrees C) between point (A2) and the point (B2).

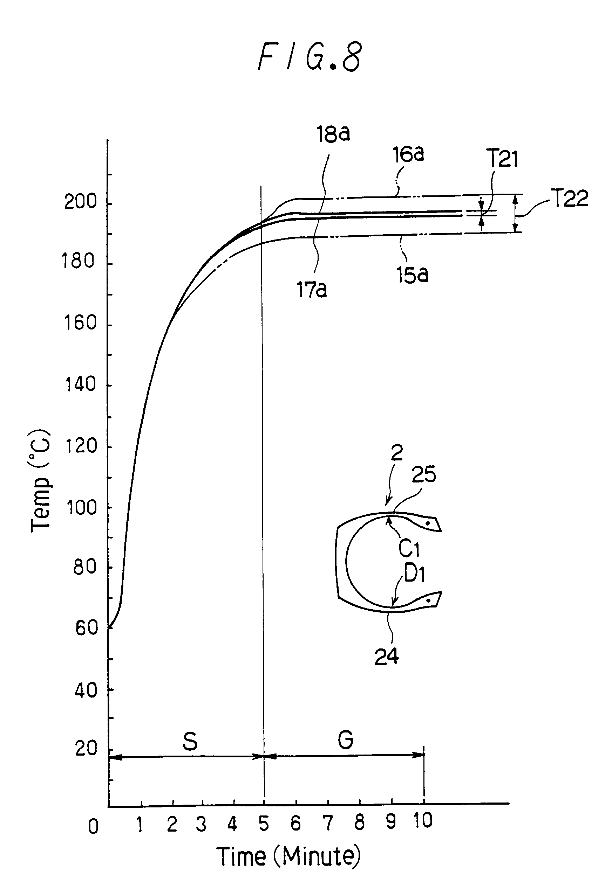

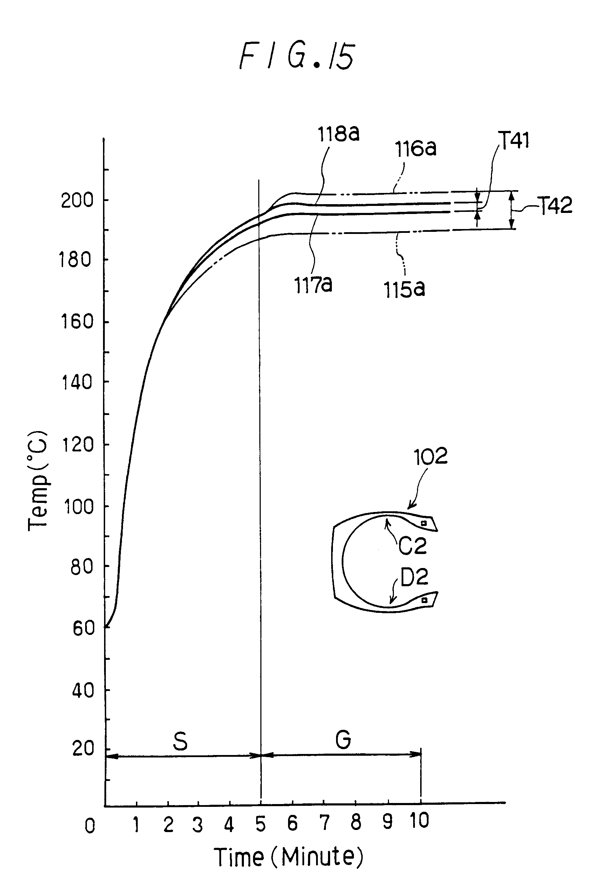

With regard to a point (C1) and a point (C2) at the upper sidewall of the tyre the temperature after the introduction of the pressurising gas tends to rise as shown by the broken line 16a and the broken line 116a respectively in Figure 8 and Figure 14. On the contrary, with regard to a point (D1) and a point (D2) at the lower sidewall of the tyre the temperature after the introduction of the pressurising gas tends to stop rising as shown by the broken line 15a and the broken line 115a respectively in Figure 8 and Figure 15. This results in a large temperature difference (T₂₂) (e.g. 12 degrees C) between the point (C1) and the point (D1) and a large temperature difference (T₄₂) (e.g. 12 degrees C) between the point (C2) and the point (D2).

Such a large temperature difference, which occurs in the above-mentioned manner, is not rectified completely by the time the vulcanising operation is finished, and therefore, the upper sidewall and the lower sidewall of the tyre (b) will have different degrees of vulcanisation from each other and this gives rise to an undesirable problem in terms of product quality. In addition, since the necessary cure time is decided according to the lower portions of the tyre (b) where the speed of temperature rise is most retarded, a vulcanising operation of longer duration has to be conducted and this is another undesirable problem also in terms of productivity and energy useage.

European Patent Publication No EP-A-0323164 falling within the terms of Article 54(3)EPC discloses a method and apparatus which seeks to minimise the above-mentioned problems wherein the heating medium is blown into the lower portion of the vulcanising chamber and the pressuring medium is subsequently blown into the upper portion of the vulcanising chamber.

The present invention was made in order to solve the above-mentioned problems, and an object of the present invention is to provide a method and an apparatus for vulcanising elastomer article which do not cause an undesirable temperature difference inside of the elastomer article during the vulcanising operation, enable a uniform vulcanisation to be carried out and accomplish a reduction of energy loss.

According to one aspect of the present invention there is provided a method for vulcanising an elastomer product including a heating step wherein an elastomer product is placed in a vulcanising chamber formed in a mould, a heating medium at a certain pressure is blown and supplied from an upper position at the centre of said vulcanising chamber to heat and pressurise said elastomer product until said elastomer product reaches a prespecified temperature or for a prespecified period of time, said heating medium supply is stopped and inert gas as a pressurising medium at a pressure not lower than said heating medium supply pressure is blown and supplied from a lower position at the centre of said vulcanising chamber towards an upper region of said vulcanising chamber until the end of the heating step, and a discharging step subsequent to said heating step wherein said heating medium and said pressurising medium are discharged to complete the vulcanising.

Preferably the heating medium is blown horizontally or towards the equator of the elastomer article or its neighbourhood along the horizontal direction, while the pressurising medium is blown towards the upper region ranging from a portion above the centre of the vulcanising chamber to an upper sidewall portion of the elastomer article.

Further condensate accumulated in the bottom of the vulcanising chamber due to condensation of the heating medium may be forcibly discharged out of the elastomer article by means of a discharging means.

In accordance with a second aspect of the present invention there is provided an apparatus for vulcanising an elastomer article comprising a mould to accept the elastomer article and provide a vulcanising chamber, a heating medium supply opening at an upper position of the centre of the vulcanising chamber for blowing the heating medium in a horizontal direction or towards a lower region of the vulcanising chamber, and a pressurising medium supply opening at a lower position at the centre of the vulcanising chamber for blowing the pressurising medium towards an upper region of the vulcanising chamber.

It is preferable to employ a further feature wherein the upper position of the centre of the vulcanising chamber is in addition an upper bladder holder portion. It is also preferable that the lower position of the centre of the vulcanising chamber means a bagwell or a support of a lower bladder holder. It is also preferable that the heating medium supply openings are formed in a heating medium supply nozzle of a detachably type. It is also preferable that the pressurising medium supply openings are formed in a pressurising medium supply nozzle of a detachable type.

In the above-mentioned methods and apparatuses, the high temperature heating medium (such as steam) is blown horizontally from an upper position at the centre of the vulcanising chamber, for example horizontally from the upper bladder holder portion towards the tyre equator or its neighbourhood, and therefore the upper half and the lower half of the tyre are uniformly blown by steam jets and therefore uniform heating is carried out.

Alternatively the heating medium may be directed downwards to the middle of the mould or lower.

In addition, condensate accumulated in the bottom of the vulcanising chamber (i.e. on the inside concave portion of the lower sidewall), is forcibly discharged by a condensate discharging means in the vulcanising operation, so as to prevent condensate accumulation which may obstruct the thermal contact between the lower sidewall and the high temperature steam and consequently obstruct the heating up of the lower sidewall. Thus slowdown or delay in heating of the lower sidewall is prevented from occurring and variations in heating conditions between regions inside the tyre are sharply reduced.

Further, by blowing the pressurising medium (gas) upwardly, for example towards the upper sidewall portion or its neighbourhood, the low temperature pressurising gas stream is directed in an inclined upward direction to the relatively high temperature steam accumulated locally in the upper portion after the steam inflow into the tyre has been weakened. Thus, a vertically circulating mixing flow against the steam is generated by the pressurising medium jet without causing adiabatic compression of the steam. Accordingly, the local accumulation of high pressure steam is rectified, and effective cooling is achieved with regard to the upper portion of the tyre which has been at relatively high temperature and the temperatures of the upper portion and the lower portion become uniform with each other.

Further, in the case when a supply nozzle of a detachable type is employed, replacement of the supply nozzle makes it possible to change the blowing direction of the heating medium and/or the pressurising medium. Thus the heating medium and the pressurising medium can be blown and supplied in the respective optimum directions and at the respective optimum angles according to the size and the shape of the elastomer article in order to obtain the most desirable result.

In order to make clear the portions of the mould to which reference is made we mean the upper position, from which the heating medium is supplied, means in a sectional view a position within a range upwardly extending from the equator (the middle) of the tyre placed in the mould, and the lower position, from which the pressurising medium is supplied, means in a sectional view a position within a range downwardly extending from the equator (the middle) of the tyre placed in the mould.

Further features and advantages of the present invention will be more clearly appreciated from the following description with the accompanying drawings, in which:
Figure 1 is a sectional view showing an embodiment of the vulcanising apparatus of the present invention;
Figure 2 is a sectional plan view of Figure 1;
Figure 3A is a schematic perspective view of a heating medium supply nozzle;
Figure 3B is a schematic plan view of the nozzle of Figure 3A;
Figure 4A is a schematic perspective view of a pressurising medium supply nozzle;
Figure 4B is a schematic plan view of the nozzle of Figure 4A;
Figure 5 is a schematic view showing a raising and lowering and rotation mechanism;
Figure 6A is an enlarged sectional view showing a major part of an embodiment of a slender pipe in a drain discharging mechanism;
Figures 6BI and 6BII show an alternative slender pipe wherein Figure 6BI is an enlarged perspective view showing a major part and Figure 6BII is an enlarged sectional view showing the same major part;
Figures 7 and 8 are graphs showing temperature differences in an elastomer article;
Figures 9 and 11 are sectional views each of which shows a different embodiment;
Figure 12 is a cross sectional view showing a major part of a bladderless type vulcanising apparatus of the present invention;
Figure 13 is a sectional view showing another embodiment of the vulcanising apparatus of the present invention;
Figures 14 to 15 are graphs showing temperature difference in an elastomer article;
Figures 16 to 19 are sectional views each of which shows a different embodiment;
Figure 20 is a sectional view showing a prior art apparatus.

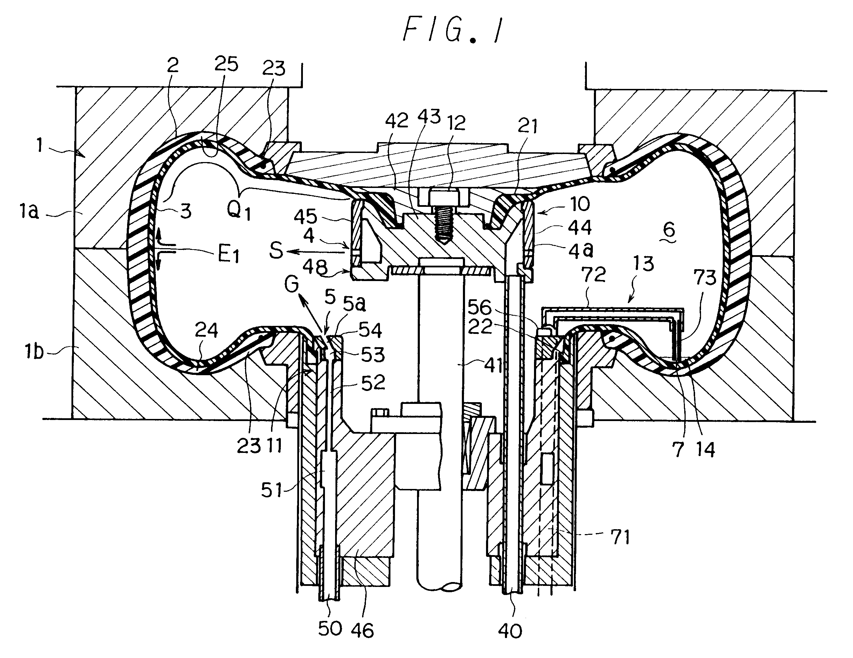

Figure 1 shows a vulcanising apparatus of the present invention of the so-called rolling-bladder type for a tyre. With respect to the mould and the central mechanism of the vulcanising chamber, the apparatus of Figure 1 employs approximately similar construction to that of the publicly known prior art apparatus. However, the apparatus of Figure 1 is different from the prior art apparatus in the particular construction of the supply means for steam and pressurising gas and in the provision of a condensate discharging mechanism.

In operation of the apparatus of Figure 1, a green tyre 2 is placed in a vulcanising chamber formed in a mould 1, internal pressure for shaping is supplied into a bladder 3, an upper inner end 21 of which is held by an upper bladder holder portion 10 while a lower inner end 22 thereof is held by a lower bladder holder portion 11, so that the green tyre 2 is shaped so as to lie near and along the inside surface of the mould 1 and the shape of the green tyre 2 becomes similar to the inside shape of the mould 1. Then the mould 1 is closed and a heating medium steam is supplied into the bladder 3 in order to heat and pressurise the green tyre 2. When the temperature of the green tyre 2 reaches a prespecified temperature or after a prespecified period of time expires, the supply of the heating medium is stopped and then a pressurising medium such as nitrogen gas at a pressure not lower than the pressure of the heating medium is supplied into the bladder 3 until the end of the heating stage, so that the temperature of the green tyre 2 is maintained at the prespecified temperature to complete the vulcanising.

The mould 1 comprises an upper mould 1a and a lower mould 1b.

The upper bladder holder portion 10 is located at the upper end of a centre post 41, i.e. at the upper position and at the centre of the vulcanising chamber, and comprises a ring 42, a block 43 and a heating medium supply nozzle 45 attached to the block 43. The ring 42 and the block 43 form an upper clamp ring 48, and the ring 42 and the block 43 are fastened by means of a bolt 12 with the upper inner end 21 of the bladder 3 being nipped and held therebetween.

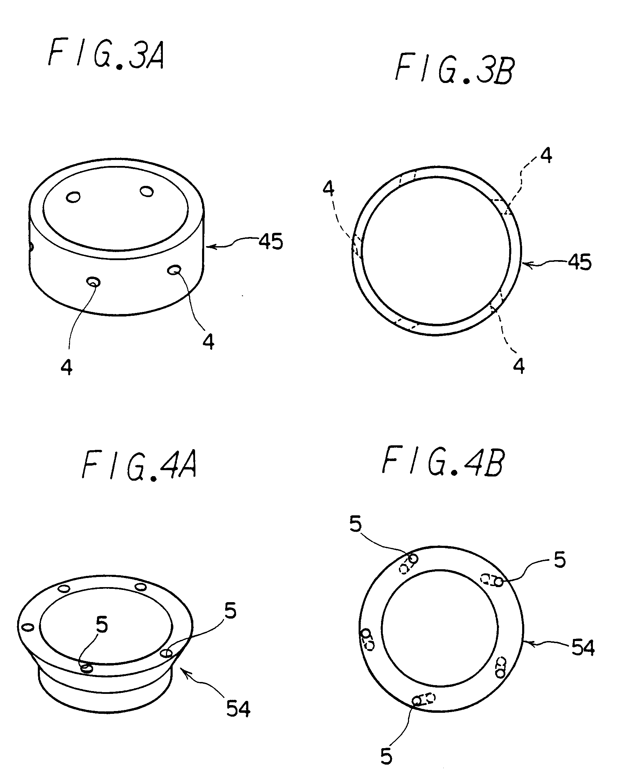

The heating medium supply nozzle 45 has a ring shape as shown in Figure 3A, and is set detachable from the block 43 so that together they form an annular space 44. The heating medium supply nozzle 45 has a plurality of heating medium supply openings 4 to communicate with the vulcanising chamber 6. A plurality of heating medium supply openings 4 are disposed at prespecified intervals around the circumferential direction. The direction, number and diameter of the heating medium supply openings 4 are selected to suit the tyre size.

A heating medium supply passage 40 is connected to the block 43 on one side to allow heating medium such as steam to be guided into the annular space 44, and on the other side of the heating medium supply passage 40 is passed through a bagwell 46 and connected to a heating medium supply source omitted in the drawing. thus the heating medium from the supply passage 40 flows through the annular space 44 and blows horizontally from the heating medium supply openings 4 into the vulcanising chamber. There are normally provided two or more supply nozzles 45 having supply openings 4 horizontally directed to the equator (E1) or its neighbourhood on the inside of the tyre. Therefore, a jet of, for example, steam evenly contacts the upper half and the lower half of the tyre, and uniform heating is carried out.

In addition, the supply path 4a of the heating medium supply opening 4 is inclined relative to the radial direction as shown in Figure 3B, and therefore the heating medium emitted from the supply opening 4 circularly flows along the circumferential direction.

With respect to the location of the heating medium supply passage 40, although it is located outside the centre post 41 in the embodiment shown in Figure 1, it may alternatively be located inside the centre post 41.

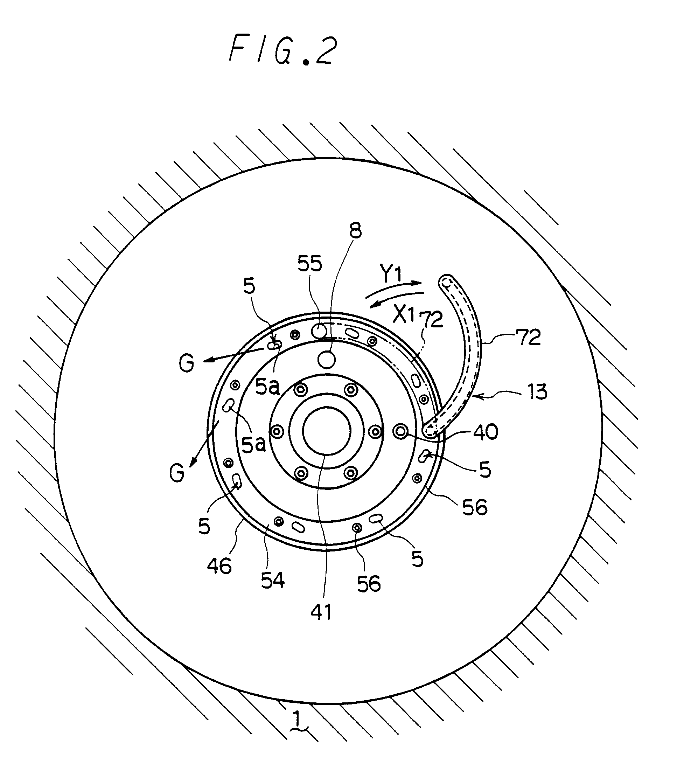

In the bagwell 46 a pressurising medium supply passage 50 is formed for supplying inert gas such as nitrogen gas, and connects and communicates with an annular relay chamber 51 internally formed in the bagwell 46. The annular relay chamber 51 further connects and communicates with a plurality of branch passages 52 disposed at predetermined intervals around the circumference. At the upper ends of the branch passages 52, a pressurising medium supply nozzle 54 is removably fastened bv bolts 56 to the upper end of the bagwell 46. The pressurising medium supply nozzle 54 has a plurality of pressurising medium supply openings 5 to communicate with the vulcanising chamber. As shown in Figure 2, the pressurising medium supply openings 5 are disposed at predetermined intervals in the circumferential direction. Thus the pressurising medium from the supply passage 50 flows through the annular relay chamber 51 into the plurality of branch passage 52 and blows from the supply openings 5 towards the upper region of the vulcanising chamber.

The pressurising medium supply nozzle 54 has a ring shape as shown in Figure 2 and Figures 4A to 4B, and there are normally two or more supply nozzles 54 having their supply openings 5 upwardly directed toward a desirable part within a region (Q1) ranging from a portion above the centre of the vulcanising chamber to the upper sidewall 25 of the tyre 2.

In the embodiment shown in Figure 1, the pressurising medium supply opening 5 is directed to the upper sidewall 25 or its neighbourhood, and therefore in this case, the pressurising medium blows, as shown by an arrow in Figure 1, in an inclined upwards direction across the inner space 6 of the tyre.

Thus the pressurising medium (gas) is blown and supplied from the lower position at the centre of the vulcanising chamber towards the upper region of the vulcanising chamber, and accordingly a long flow distance of the gas stream cross the inner space 6 of the tyre is provided so that the mixing effect with the heating medium (steam) is enhanced and temperature difference within the inner space 6 of the tyre is avoided.

Also the supply path 5a for the pressurising medium is inclined relative to the radial direction as shown in Figure 4B, and therefore the heating medium emitted from the supply opening 5 circularly flows in the circumferential direction.

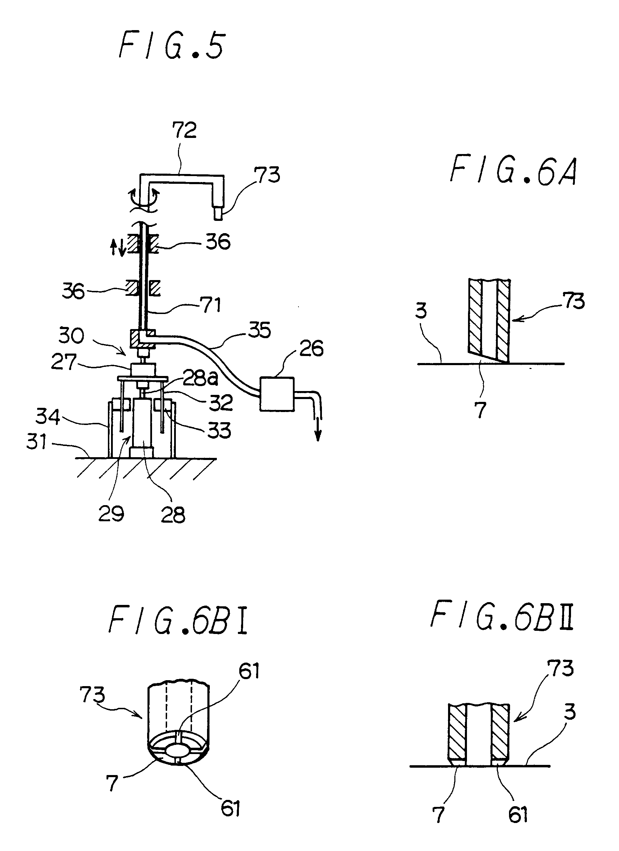

A condensate discharging mechanism 13 may also be used in combination with the construction of the above-mentioned embodiment (in which the heating medium is blown horizontally from the upper position of the centre of the vulcanising chamber while the pressurising medium is blown upwardly from the lower position of the centre of the vulcanising chamber). The condensate discharging mechanism 13 comprises a pipe 71 which is in a bagwell 46 and serves as a discharging passage, an arcuate pivot arm 72 which connects and communicates with the pipe 71 and has an internally formed passage, and a slender pipe 73 which connects and communicates with the end of the pivot arm 72 and is located at the bottom of the vulcanising chamber (at the lower sidewall of the tyre). The pipe 71 is attached to the bagwell in such a manner that as shown in Figure 5 the pipe 71 is able to move upwardly and downwardly by virtue of an up-and-down mechanism 29 using an air cylinder 28 etc and also can move pivotally by virtue of a rotation mechanism 30 having a rotary actuator 27 etc. Thus, the pivot arm 27 can pivotally move as indicated by arrows (X1) and (Y2) shown in Figure 2, and can also make an up-and-down movement. Therefore, the pivot arm 72 is overhung from the bagwell 46 into the vulcanising chamber during the vulcanising operation as indicated by a solid line in Figure 2, on the other hand before or after the vulcanising operation the pivot arm 72 is rested on the bagwell 46 as indicated by a broken line in Figure 2. When the pivot arm 72 is rested, the slender pipe 73 is housed in a protective sheath hole 55 formed in the bagwell 46.

Now details of the operation to bring the pivot arm 72 from the state indicated by the solid line in Figure 2 (i.e. the state shown in Figure 1) to the other state indicated by the broken line in Figure 2 will be described. First the pipe 71 is moved upwardly by means of the up-and-down mechanism 29, the the pipe 71 is rotated by means of the rotation mechanism 30 to pivotally move the pivot arm 72 in the direction of arrow (X1) until the slender pipe 73 comes to a position above the sheath hole 55, and finally the pipe 71 is moved downwardly by means of the up-and-down mechanism 29 to allow the slender pipe 73 to enter the sheath hole 55. When it is intended to bring the pivot arm 72 from the position of the broken line to the position of the solid line, the above-mentioned operation is conducted in the reverse order.

The up-and-down mechanism 29 and the rotation mechanism 30 are concretely indicated in Figure 5, in which, the bottom end of the pipe 71 is connected to the rotary actuator 27, the rotary actuator 27 is connected to a rod 28a of the air cylinder 28, and the air cylinder 28 is vertically mounted on a lower frame 31 of a press. Numeral 32 indicates an anti-rotation rod, numeral 33 indicates a sliding bearing through which the anti-rotation rod 32 passes slidably, and numeral 34 is a support for the sliding bearing 33 and is vertically mounted on the lower frame 31 of the press. The bottom end of the pipe 71 also connects and communicates with a flexible hose 35 which connects with a trap 26. Numeral 36 indicates a part of the lower frame of the press which supports the pipe 71 slidably and rotatably.

The condensate discharging mechanism 13 operates by the accumulated condensate 14 being pushed by the pressure in the inner space 6 of the tyre, and forcibly discharged out of the tyre through the slender pipe 73, the internally formed passage of the pivot arm 72, the pipe 71, the flexible hose 35 and the steam trap 26. The condensate discharging mechanism 13 can optionally be connected to a vacuum mechanism so that the accumulated condensate can be sucked out.

Numeral 8 in Figure 2 indicates an outlet opening for condensate, gas and the like.

Now a vulcanising method using the apparatus of this first embodiment of the present invention for a tyre as a typical elastomer article will be described.

First, a tyre 2 is positioned surrounding the outer peripheral surface of the deflated bladder 3, Then, as the mould 1 is being closed, shaping medium is supplied to inflate the bladder 3 until the shape of the tyre 2 becomes similar to the inside shape of the mould 1 and lies near and along the inside of the mould 1, and the bladder 3 and the tyre 2 are brought into close contact with each other.

Then the mould 1 is completely closed and steam at 15 kg/cm² is introduced into the heating medium supply passage 40. The steam is supplied from the heating medium supply openings 4 located at the upper position at the centre of the apparatus to the vulcanising chamber 6 within the bladder 3. The steam from the supply opening 4 is supplied horizontally as indicated by the arrow in Figure 1 and blown toward the equator (E1) evenly relative to the upper side and the lower side. This steam supply provides heating of the tyre 2 to the temperature required to begin the vulcanisation reaction, for example about 180 degrees C.

Then a pressurising gas at a lower temperature near room temperature (e.g. 40 degrees C) and at a pressure of 18 kg/ cm² is introduced through the pressurising medium supply opening 5 into the inner space 6. The gas from the supply opening 5 is supplied upwardly and provides cooling and mixing in the upper portion of the inner space 6, then the gas gradually flows downwardly and is mixed with the remaining steam.

Thus, by the cooling effect and the mixing effect occurring in the upper regions within the tyre 2 by virtue of the upward stream of the pressurising gas in combination with the even steam flow relative to the upper side and the lower side, large temperature difference between the upper portion and the lower portion in the inner space 6 is prevented from occurring, and large local temperature rises in the upper portion due to upward adiabatic compression of steam in the tyre as observed in the prior art method is also prevented from occurring. Further, insufficient heating of the lower bead portion 23 is also prevented.

Once the tyre has fully been pressed into the mould, the pipe 71 of the drain discharging mechanism 13 is raised by a small distance by means of the up-and-down mechanism. Then the pivot arm 72 is rotated in the direction indicated by arrow (Y1) in Figure 2 by means of the rotation mechanism, and thereafter, the pipe 71 is moved downwardly by means of the up-and-down mechanism, so that the pivot arm 72 is overhung from the bagwell 46 into the vulcanising chamber and concurrently the bottom open end 7 of the slender pipe 73 is located close to the bladder surface at the lower sidewall 24 of the tyre 2. Thus, accumulated condensate 14 in the bottom portion of the tyre 2 due to condensation of steam, which is indicated in Figure 1, is pushed by the internal pressure in the tyre 2 and forcibly discharged out of the tyre through the slender pipe 73, the pivot arm 72, the pipe 71, the flexible 35 and the steam trap 26.

The steam trap 26 prevents the internal pressure of the tyre 2 from escaping but allows condensate out.

Because any accumulated condensate 14 obstructs the contact between the surface of the lower sidewall and the high temperature steam and consequently obstructs the heating of the lower sidewall, this discharging of accumulated condensate 14 sharply minimises the difference in heating condition in the tyre 2. Further in combination with the optimisation of the supply direction of the heating medium, the heating of the tyre is carried out uniformly. Moreover in combination additionally with the upward supply of the pressurising medium, the uniformity of the temperature in the tyre 2 during vulcanisation is sharply improved.

In order to allow the accumulated condensate 14 to flow into the slender pipe 73 even in case that the bottom end 7 of the slender pipe 73 is in contact with the surface of the bladder 3, the bottom open end 7 may have an inclined end surface as shown in Figure 6A or a plurality of slots 61 as shown in Figures 6BI and 6BII. An example of the slot 61 is a radial slot which makes the bore of the slender pipe 73 communicate with the outside.

After the vulcanising operation is completed a valve in an outlet pipe omitted in the drawing is opened to discharge the mixture of gas and steam out of the inner space 6 via the outlet pipe. Thereafter, the pipe 71 of the condensate discharging mechanism 13 is moved upwardly, the pivot arm 72 is rotated along the direction of the arrow (X1) in Figure 2, and then the pipe 71 is moved downwardly to be rested as illustrated by the broken line in Figure 2. Subsequently, the above-mentioned valve is closed and another valve opened, the centre post 41, the bagwell 46 nd the lower bladder holder portion 11 are moved downwardly to remove the bladder 3 from the inside of the tyre 2, the mould 1 is opened, and the vulcanised tyre is taken out of the mould 1.

It is a matter of course that the so-called bladderless vulcanisation does not have the above-mentioned bladder removal step.

In the drawings the symbol (S) indicates steam as a heating medium and the symbol (G) indicates gas as a pressurising medium.

Figure 7 shows a temperature difference between a point (A1) at the bead portion 23 on the upper side and a point (B1) at the bead portion 23 on the lower side of the tyre 2 which is subjected to the vulcanisation using the apparatus shown in Figure 1. The temperature of the point (A1) after the introduction of the pressurising gas exhibits a behaviour indicated by a solid line 18, the temperature of the point (B1) after the introduction of the pressurising gas exhibits a behaviour indicated by a solid line 17, and the temperature difference (T₁₁) between the point (A1) and the point (B1) is about 2 degrees c.

Figure 8 shows a temperature difference between a point (C1) at the upper sidewall 25 and a point (D1) at the lower sidewall 24 of the tyre 2 which is subjected to the vulcanisation using the apparatus shown in Figure 1. The temperature of the point (C1) after the introduction of the pressurising gas exhibits a behaviour indicated by a solid line 18a, the temperature of the point (D1) after the introduction of the pressurising gas exhibits a behaviour indicated by a solid line 17a, and the temperature difference (T₁₂) between the point (C1) and the point (D1) is about 2 degrees C.

As described hereinbefore, the most desirable way to provide heating evenly relative to the upper side and the lower side is to supply the heating medium horizontally toward the equator of the vulcanising chamber. However, in the case that the duration period of the heating medium introduction is required to be set relatively longer such as the case that the thickness of the elastomer article is relatively larger, a large temperature difference between the upper side and the lower side still can occur particularly in the late stage in the heating medium introduction operation. Therefore, in some cases it might be necessary to employ another method described below in order to compensate or correct the above-mentioned temperature difference.

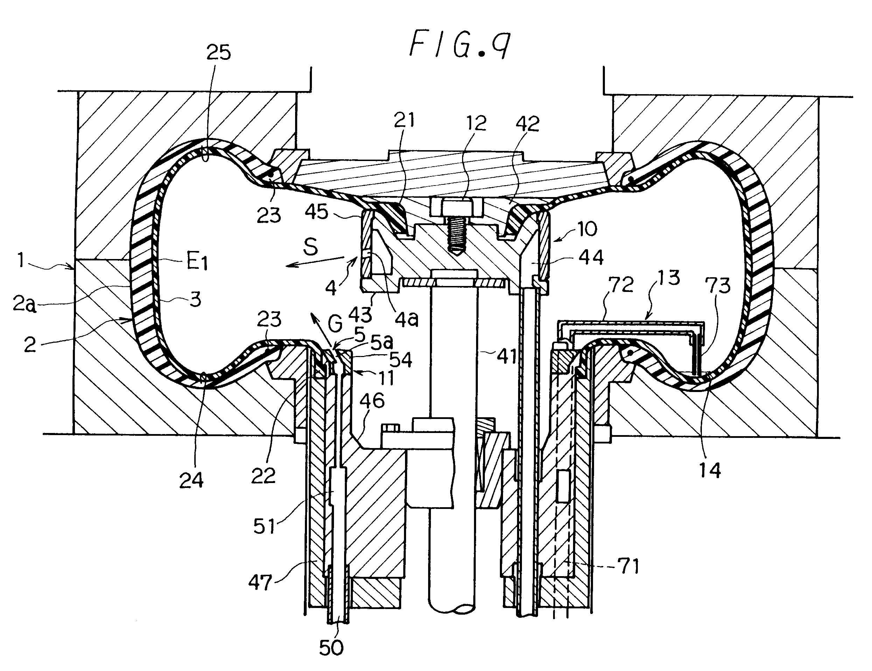

Figure 9 shows another embodiment particularly applicable to a low aspect ratio tyre. A low aspect ratio tyre has a maximum sectional width which is larger than its sectional height, and accordingly the tread width is large and the distance between the upper sidewall 25 and the lower sidewall 24 is large.

If there is employed the apparatus in which the heating medium is supplied horizontally as shown in Figure 1, then a direct heating effect at the upper sidewall 25 and the lower sidewall 24 by steam injection becomes small and an increase of internal pressure causes a reduction of steam flow velocity. when the flow velocity of gaseous steam in the vulcanising chamber approached approximately zero, as previously mentioned, wet steam which has lost its enthalpy falls downwardly while the rest which is still superheated rises upwardly. In the case of a tyre having a large dimension along the vertical direction (i.e. along the sectional width) , the temperature gradient along the vertical direction inside the tyre is particularly great.

In that case, there can be employed a method and an apparatus as shown in Figure 9 wherein the heating medium (steam) is supplied from an upper position at the centre of the vulcanising chamber downwardly to the equator (E1) or its neighbourhood, so that the steam distribution toward the lower sidewall 24 is increased to rectify the effect of the temperature gradient, and the temperature difference along the vertical direction becomes smaller.

Also in this case, the previously mentioned condensate discharging mechanism can preferably be employed in combination with the above-mentioned construction, so that the accumulated condensate in the bottom of the vulcanising chamber is forcibly discharged. Because this embodiment is almost similar to the embodiment of Figure 1 except for the steam supply direction mentioned above, a further explanation therefor is omitted.

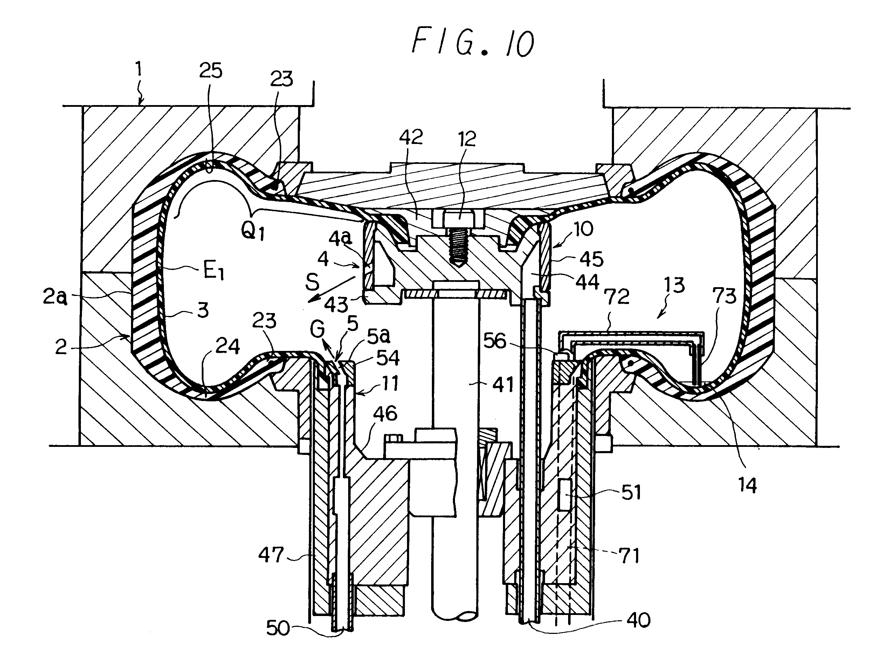

Figure 10 shows another embodiment particularly suitable for a high aspect ratio tyre having a large diameter.

Large diameter high aspect ratio tyres have a sectional height which is larger than the maximum sectional width. That is, the distance from the steam supply opening to the tread surface is large and the distance from the tread 2a to the bead portion 23 is also large. Therefore, in the case where steam is blown horizontally to the equator E1, the velocity of the steam which contacts the tread 2a becomes small and the direct heating effect provided by the steam jet to the inside of the vulcanising chamber also becomes small. Further, because the distance from the tread 2a to the bead portion 23 is also large, the heating effect provided by the return stream of the steam also becomes small and the heating rate at the bead portion blows down relatively. Thus, after the heating medium flow velocity approaches to approximately zero, the temperature of the lower bead portion 23 is apt to be lower than other part as a result of the above-mentioned insufficient heating.

In that case, there can be employed a method and an apparatus as shown in Figure 10 wherein the heating medium (steam) is supplied from the upper position of the centre of the vulcanising chamber downwardly to the lower sidewall 24, so that the steam distribution toward the lower bead portion 23 can be increased to rectify the above-mentioned insufficient heating.

Also in this case, the previously mentioned condensate discharging mechanism can be employed in combination with the above-mentioned construction, so that the accumulated condensate in the bottom of the vulcanising chamber is forcibly discharged. Because this embodiment is almost similar to the embodiment of Figure 1 except for the steam supply direction mentioned above, a further explanation therefor is omitted.

As apparatus of the present invention employs as already mentioned a structure in which the heating medium supply nozzle 45 is removably attached by means of bolts or the like, the direction, the number and the diameter of the supply opening 4 can be selected according to the tyre size and the vulcanisation requirements.

Further, by blowing the pressurising medium in an inclined upward direction, for example toward the upper sidewall portion 25, the low temperature pressurising gas stream is directed along an inclined direction to the relatively high temperature steam accumulated locally in the upper portion because of the vertical temperature gradient in the tyre 2. Thus, a vertically circulating mixing with the steam is generated by the kinetic energy of the pressurising medium jet without causing adiabatic compression of the steam. Accordingly, local accumulation of the steam is avoided, an effective cooling is achieved with regard to the upper portion of the tyre 2 which has been at relatively high temperature due to the temperature gradient of the tyre 2, and the temperatures of the upper portion and the lower portion of the tyre 2 become uniform to each other.

In addition, by injecting pressurising medium in an inclined upward direction and in a direction inclined relative to the radial direction, a circular flow along the circumferential direction is generated in the inner space of the tyre and the mixing effect with steam is enhanced.

Further, since a supply nozzle 54 of a detachable type is employed, the pressurising medium can be blown and supplied in the optimum directions to suit the size and the shape of the elastomer article in order to obtain the most desirable result.

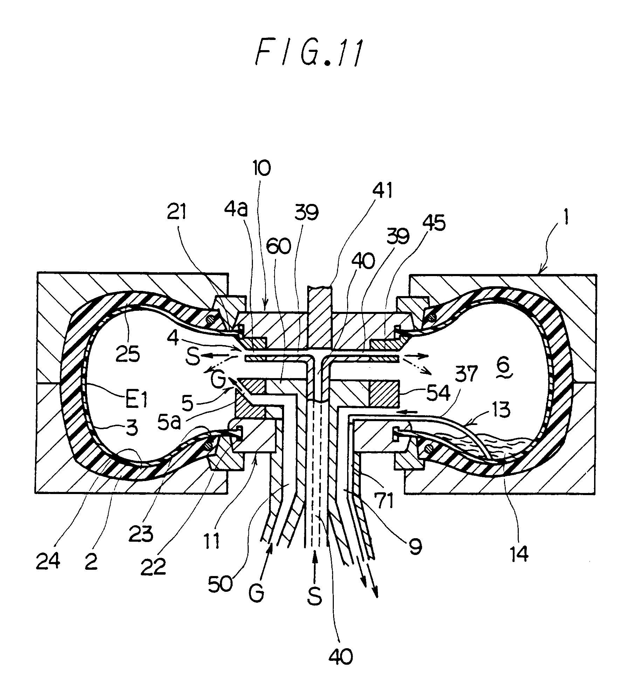

Figure 11 shows another different embodiment in which a vulcanising apparatus of the so-called Bag-O-Matic (BOM) type is used. In this apparatus the heating medium supply passage 40 is located in a centre post 41, and an upper bladder holder portion 10 has a plurality of radially disposed branch passages 39, the branch passages 39 being in contact and communication with the heating medium supply passage 40. The the end openings of the branch passages 39, a heating medium supply nozzle 45 having a ring shape is detachably fastened by means of bolts omitted from the drawing. The heat medium supply opening 4 of the supply nozzle 45 is directed to the horizontal direction. Since the supply nozzle 45 is of a removable type, the supply opening 4 can optionally be directed in an inclined downward direction as indicated by broken arrow or line in Figure 11. Therefore, a supply nozzle 45 having the most desirable opening can be attached to suit the shape and the size of tyre to be cured.

In addition, it is preferably to incline each heating medium supply path 4a relative to the radial direction in order to make the injected medium such as steam flow circularly around the circumferential direction.

With respect to the pressurising medium (gas), a pressurising medium supply passage 50 is located in a support 60 of a lower bladder holder portion 11, and a plurality of pressurising medium supply openings 5 are disposed in directions through the supply passage 50 towards the upper region of the vulcanising chamber (for example toward an upper sidewall 25). The supply openings 5 are formed in a pressurising medium supply nozzle 54 which is removably fastened to the support 60 by means of bolts omitted in the drawing. Therefore, a supply nozzle 54 having supply openings 5 in the most desirable direction, diameter and number can be attached according to the shape and the size of the tyre.

Also in this case, by injecting the pressurising medium in a direction inclined relative to the radial direction, the pressurising medium flows circularly along the circumferential direction in the inner space 6 of the vulcanising chamber and provides effective mixing with the remaining steam.

The support 60 of the lower bladder holder portion 11 has an outlet passage 9 for steam and gas, and the upper end of the outlet passage 9 extends in the radially outward direction, an open end of which is located at one position in the inner space 6 of the tyre.

In this type embodiment a hose 37 having sufficient flexibility and a pipe 71 are used as a condensate discharging mechanism 13 for discharging the condensate 14 accumulated at the lower sidewall 24 during the vulcanising operation. In this case, an up-and-down movement or a rotational movement of the pipe 71 is normally not required.

As previously mentioned there can be employed a construction in which a condensate discharging mechanism 13 is not provided and the heating medium (steam) is supplied horizontally from the upper position of the centre of the vulcanising chamber while the pressurising medium (gas) is supplied from the lower position of the centre of the vulcanising chamber toward the upper region of the vulcanising chamber. The meaning of the above expression "supplied horizontally" includes a state, as previously mentioned, that the medium is supplied toward the equator or its neighbourhood of the tyre 2, and the meaning of the term "upper region" includes, as previously mentioned, a region (Q1) ranging from the portion above the centre of the vulcanising chamber to the upper sidewall 25 of the tyre 2. The meaning of the term "upper position of the centre of the vulcanising chamber" includes, as previously mentioned, the upper bladder holder portion 10, and the meaning of the term "lower position of the centre of the vulcanising chamber" includes, as previously mentioned, the upper end of the bagwell 46 in case of a rolling-in-bladder type vulcanising apparatus as shown in Figure 1 etc. That is, in such an apparatus a pressurising medium supply nozzle 54 is removably attached to the upper end of the bagwell 46, and the supply nozzle 54 has along its circumferential direction a plurality of pressurising medium supply openings 5 directed to the region (Q1) ranging from the portion above the centre of the vulcanising chamber to the upper sidewall 25 of the tyre 2. In this connection, it is preferable to locate the supply opening 5 at the same height as or slightly lower than the upper end of the lower bead portion 23 of the tyre 2 as shown in Figure 1 and therefore, in the illustrated embodiment the supply openings 5 are located slightly lower than the upper end of the bead portion 23.

Therefore, the pressurising gas is directly supplied right across the inner space 6 of the tyre and the gas travels a long distance in this space as shown in Figure 1, so that the mixing effect with the remaining steam is enhanced and the temperature difference within the inner space 6 of the tyre is rectified. Moreover, the injected steam contacts evenly with the upper half and the lower half of the tyre and uniform heating of the upper half and the lower half is carried out.

In the Bag-O-Matic type vulcanising apparatus as shown in Figure 11, the term "lower position of the centre of the vulcanising chamber" indicates, as previously mentioned, the upper position of the support 60 of the lower bladder holder portion 11. That is, in such an apparatus a pressurising medium supply nozzle 54 is removably attached to the upper position of the support 60, and the supply nozzle 54 has along its circumferential direction a plurality of pressurising medium supply openings 5 directed to the previously mentioned region (Q1).

Therefore, also in this embodiment similarly to the embodiment of Figure 1, the pressurising gas travels a long distance within the inner space 6, so that the temperature difference within the inner space 6 of the tyre is rectified and further the uniform heating of the upper half and the lower half is carried out.

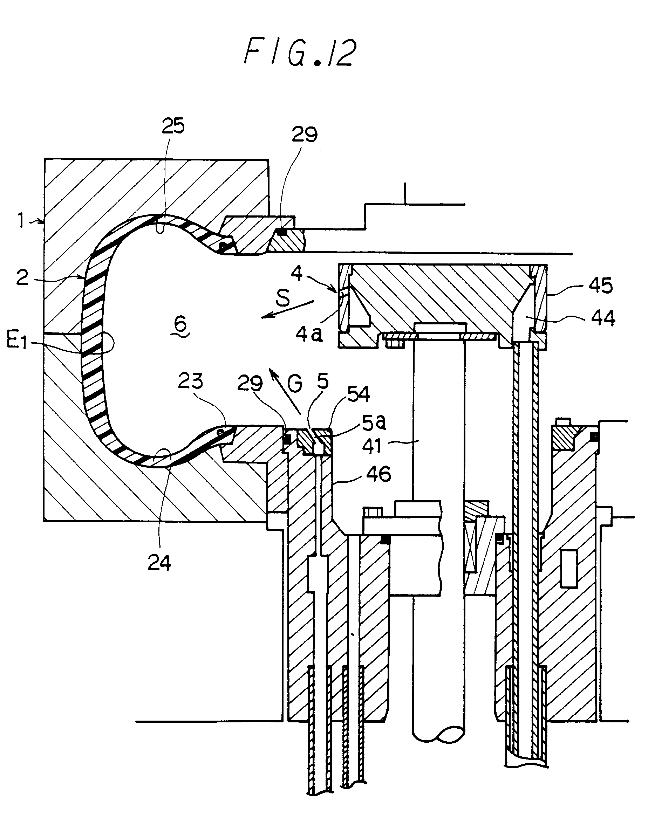

It is a matter of course that the present invention can be applied to a bladderless type of apparatus, as shown in Figure 12, in which a bladder is not employed. In that case, seal rings 29,29 are to be employed as shown in Figure 12.

It should be noted that the present invention is not limited to the specific embodiments above-mentioned, and further modification, for example an employment of a construction wherein a heating medium supply passage 40 is located in a centre post 41, can be freely made without departing from the sprit or the scope of the present invention.

The present invention described hereinbefore provides the following advantageous effects.

There is employed a construction wherein high temperature steam as a heating medium is supplied from the upper position of the centre of the vulcanising chamber along a horizontal direction while low temperature gas as a pressurising medium is supplied from the lower position of the centre of the vulcanising chamber toward the upper region of the vulcanising chamber, a construction wherein a condensate discharging mechanism 13 is additionally employed in combination with the above construction, or a construction wherein steam is supplied from the upper position of the centre of the vulcanising chamber toward the lower region of the vulcanising chamber while a pressurising gas is supplied from the lower position of the centre of the vulcanising chamber toward the upper region of the vulcanising chamber and a condensate discharging mechanism 13 is additionally employed in combination therewith. Consequently, the method and apparatus of the present invention prevent a large temperature difference from occurring within an inner space of the elastomer product placed in the mould 1. Therefore, uniform vulcanising can be carried out and the product quality in terms of uniformity can be improved. The prevention of such temperature difference can also provide shortening of vulcanising time, improvement of productivity, and reduction of energy loss.

In addition, a vulcanising apparatus having removable type supply nozzles 45,54 allows supply nozzles 45,54 having suitable directions in conformance with the shape and size of the elastomer product to be easily attached, and therefore the heating medium and the pressurising medium can be supplied in the optimum direction and in the optimum amount.

Temperature difference between the upper side and the lower side within the inner space which occurs in the prior art apparatus can be prevented from occurring. For example in case of the apparatus of Figure 1, the internal temperature change after the introduction of steam is shown in Figure 7. That is, the temperature of the point (A1) at the bead portion 23 on the upper side of the tyre 2 after the introduction of the pressurising gas exhibits a behaviour indicated by a solid line 18, the temperature of the point (B1) at the bead portion 23 on the lower side after the introduction of the pressurising gas exhibits a behaviour indicated by a solid line 17, and as a result the temperature difference (T₁₁) between the point (A) and the point (B1) is about 2 degrees C. On the other hand in the prior art apparatus, reduction of steam velocity in the late stage in the heating medium introduction operation gradually causes temperature difference, and further in a stage after the pressurising gas introduction the lower bead is cooled by the lower temperature of the gas because the supply opening is located at a lower position and the gas is supplied toward the lower region of the tyre, while the upper bead temperature rises due to adiabatic compression effect in despite of the lower temperature of the introduced gas. Thus the temperature of the point (A1) at the upper bead portion and the point (B1) at the lower bead portion, for example, behave as indicated respectively by the broken lines 16 and 15, and as a result, the temperature difference (T₁₂ is, for example 13 degrees C). However, it is clearly observed as previously mentioned that the method and the apparatus of the present invention sharply reduce the temperature difference.

In addition, as shown in Figure 8, the temperature of the point (C1) at the upper sidewall 25 of the tyre 2 after the introduction of the pressurising gas exhibits a behaviour indicated by a solid line 18a, the temperature of the point (D1) at the lower sidewall 24 after the introduction of the pressurising gas exhibits a behaviour indicated by a solid line 17a, and as a result the temperature difference (T₂₁) between the point (C1) and the point (D1) is about 2 degrees C. On the other hand in the prior art apparatus, the temperature of the point (C1) at the upper sidewall behaves as indicated by the broken line 16a while the temperature of the point (D1) at the lower sidewall behaves as indicated by the broken line 15a, and the temperature difference becomes larger for the almost same reasons as those previously mentioned and as a result the temperature difference (T₂₂) between the upper side and the lower side is, for example, about 12 degrees C. However, it is clearly observed that the present invention sharply reduces the temperature difference.

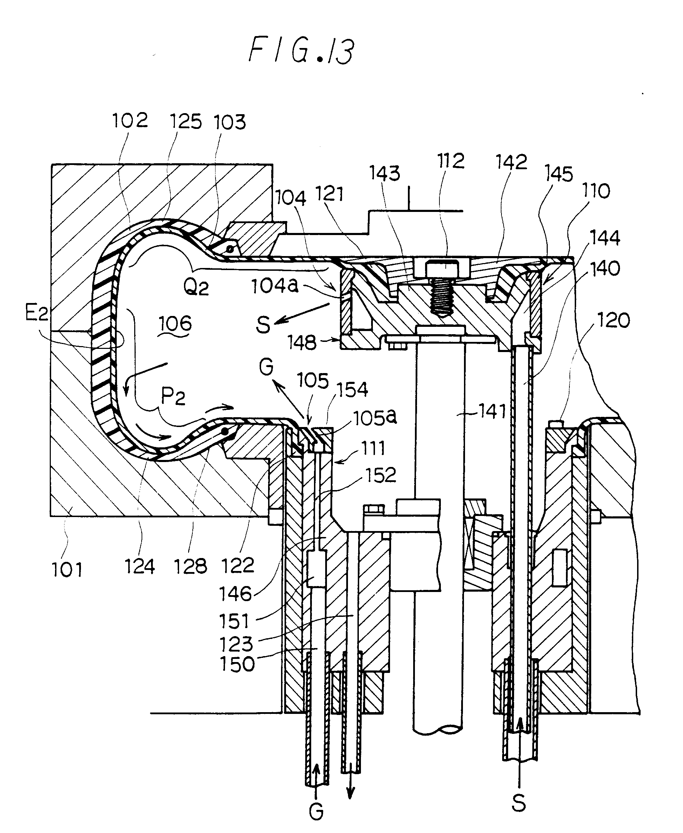

Figure 13 shows a different vulcanising apparatus of the present invention of a so-called rolling-in-bladder type for a tyre. In the apparatus of Figure 13, a green tyre 102 is placed in a vulcanising chamber formed in a mould 101, internal pressure for shaping is supplied a bladder 103, an upper inner end 121 of which is held by an upper bladder holder portion 110 while a lower inner end 122 thereof is held by a lower bladder holder portion 111, so that the green tyre 102 is shaped so as to lie near and along the inside surface of the mould 101 and the shape of the green tyre 102 becomes similar to the inside shape of the mould 101. Then the mould 101 is closed and a heating medium such as steam is supplied into the bladder 103 in order to heat and pressurise the tyre 102 until the tyre 102 takes up the shape and position shown in Figure 13. When the temperature of the green tyre 102 reaches a prespecified temperature or after a prespecified period of time expires, the supply of the heating medium is stopped and then a pressurising medium such as nitrogen gas at a pressure not lower than the pressure of the heating medium is supplied until the end of the heating period into the bladder 103, so that the temperature of the green tyre 102 is maintained at the prespecified temperature to complete the vulcanising.

The upper bladder holder portion 110 is located at the upper end of a centre post 141, and comprises a ring 142, a block 143 and a heating medium supply nozzle 145 attached to the block 143. The ring 142 and the block 143 form an upper clamp ring 148, and the ring 142 and the block 143 are fastened by means of bolts 112 with the upper inner end 121 of the bladder 103 being nipped and held therebetween.

The heating medium supply nozzle 145 has a ring shape like the nozzle shown in Figure 3A, and is set removably in the block 143 to form an annular space 144 between the block 143 and the nozzle 145 itself. The heating medium supply nozzle 145 has a plurality of heating medium supply openings 104 to make the annular space 144 communicate with the vulcanising chamber. The heating medium supply openings 104 are disposed at prespecified intervals along the circumferential direction. The direction, number and diameter of the heating medium supply openings 104 are selected according to the tyre size.

A heating medium supply passage 140 is connected to the block 143 on one side to allow the heating medium such as steam to flow into the annular space 144, and on the other side of the heating medium supply passage 140 is passed through a bagwell 146 and connected to a supply source of the heating medium. Thus the heating medium out of the supply passage 140 flows through the annular space 144 and blows horizontally from the heating medium supply openings 104 into the vulcanising chamber. There are normally prepared two or more supply nozzles 145 having the supply openings 104 downwardly directed to a desired part within a region ranging from the equator (the tread centre) (E1) or its neighbourhood inside of the tyre to lower sidewall 124 or its neighbourhood of the tyre 102.

The heating medium flows along the inside shape of the tyre through the lower sidewall 124, and accordingly pushes the accumulated condensate toward the lower bead portion 128 to discharge it to inside the bagwell 146.

In the embodiment shown in Figure 13, the supply opening 104 is directed to the neighbourhood of the lower portion of the equator (E2), and therefore the heating medium is blown in a downward inclined direction across the inner space 106 of the tyre as shown by an arrow in Figure 13.

In addition, a supply path 104a for the heating medium supply opening 104 is inclined relative to the radial direction like those shown in Figure 3B, and therefore the heating medium emitted from the supply opening 104 flows circularly around the circumferential direction.

In the bagwell 146, a pressurising medium supply passage 150 is formed for supplying inert gas such as nitrogen gas, and connects and communicates with an annular relay chamber 151 internally formed in the bagwell 146. the annular relay chamber 151, further connects and communicates with a plurality of branch passages 152 disposed at predetermined intervals along the circumferential direction. At the upper open ends of the branch passages 152, a pressurising medium supply nozzle 154 is removably fastened by bolts 156 to the upper end of the bagwell 146. The pressurising medium supply nozzle 154 has a plurality of pressurising medium supply openings 105 to make the branch passages 152 communicate with the vulcanising chamber. The pressurising medium supply openings 105 are disposed at predetermined intervals along the circumferential direction. Thus the pressurising medium from the supply passage 150 flows through the annular relay chamber 151 into the plurality of the branch passage 152 and blows from the supply openings 105 into the vulcanising chamber.

The pressurising medium supply nozzle 154 has a ring shape like the nozzle shown in Figure 4A, and there are normally prepared two or more supply nozzles 154 having the supply opening 105 upwardly directed toward a desirable part within a region (Q2) ranging from a portion above the centre of the vulcanising chamber to the upper sidewall 125 of the tyre 102.

In the embodiment shown in Figure 13, the pressurising medium supply opening 105 is directed to the upper sidewall 125 or its neighbourhood of the tyre 102, and therefore in this case, the pressurising medium blows, as shown by an arrow in Figure 13, along inclined upward direction across the inner space 106 of the tyre.

Thus the pressurising medium (gas) is blown and supplied from the lower position of the centre of the vulcanising chamber toward the upper region of the vulcanising chamber, and accordingly a long flowing distance of gas stream across the inner space 106 of the tyre is permitted so that the mixing effect with the heating medium such as steam is enhanced and the temperature difference within the inner space 106 of the tyre is rectified.

In this connection, a supply path 105a for pressurising medium is inclined relative to the radial direction like the nozzle shown in Figure 4B, and therefore the heating medium emitted from the supply opening 105 circularly flows along the circumferential direction.

Further, an outlet passage 123 for condensate liquid and gas is provided at the lower position of the bagwell 146, and the upper open end therefor is located in the inner space 106 of the tyre.

There is explained next a vulcanising operation using an apparatus having the above-mentioned construction for a tyre as a typical elastomer article.

First, a green tyre 102 is attached to the outer peripheral surface of the bladder. Then, a shaping medium is supplied through a pipe omitted in the drawing to inflate the bladder 103 until the shape of the tyre 102 becomes similar to the inside of the mould 101, and subsequently the mould 101 is totally closed.

Then steam at 15 kg/cm² is introduced into the heating medium supply passage 140 in order to supply the steam to the vulcanising chamber (i.e. the inner space 106 within the bladder 103). The steam from the supply opening 104 is supplied towards the neighbourhood of the lower portion of the equator (E2) (i.e. the tread centre) and the major part thereof flows as a jet along the inside shape of the tyre view the lower sidewall toward the lower bead portion.

Accordingly the heating medium pushes the accumulated condensate liquid in the bottom of the inside of the tyre to lead and discharge it into the outlet passage 123, and the temperature of the lower sidewall rises.

This steam supply provides heating of the tyre 102 to a temperature required to effect the vulcanisation reaction, for example about 180 degrees C.

Then a pressurising gas at a lower temperature near to room temperature (e.g. 40 degrees C) and at a pressure of 18 kg/cm² is introduced to the pressurising medium supply passage 150 in order to supply pressurising gas into the inner space 106. The gas from the supply opening 105 is supplied upwardly and provides cooling and mixing for the upper portion of the inner space 6, then the gas gradually flows downwardly and is mixed with the remaining steam.

Thus, by the cooling effect and the mixing effect occurring in the upper portion within the tyre 102 by virtue of the upward stream of the pressurising gas, large temperature difference between the upper portion and the lower portion in the inner space 106 is prevent from occurring, and accordingly the temperature difference along the vertical direction which is observed in the prior art apparatus can be prevented.

After the vulcanising operation is completed, a valve in an outlet pipe omitted in the drawing is opened to discharge the mixture of gas and steam out of the inner space 106 via the outlet pipe. Subsequently, the above-mentioned valve is closed with another valve opened, the upper clamp ring, the centre post 141, the bagwell 146 and the lower bladder holder portion 111 are moved downwardly to remove the bladder 103 from the inside of the tyre 102, the mould 101 is opened, and the vulcanised tyre 102 is taken out of the mould 101.

In the drawings the symbol (S) indicates steam as a heating medium and the symbol (G) indicates gas as a pressurising medium.

Figure 14 shows a temperature difference between a point (A2) at the bead portion on the upper side and a point (B2) at the bead portion on the lower side of the tyre 102. the temperature of the point (A2) after the introduction of the pressurising gas exhibits a behaviour indicated by a solid line 118, the temperature of the point (B2) after the introduction of the pressurising gas exhibits a behaviour indicated by a solid line 117, and as a result the temperature difference (T₃₁) between the point (A2) and the point (B2) is about 4 degrees C which is remarkably small value compared with the prior art method (13 degrees C).

Figure 15 shows a temperature difference between a point (C2) at the upper sidewall and a point (D2) at the lower sidewall of the tyre 102. The temperature of the point (C2) after the introduction of the pressurising gas exhibits a behaviour indicated by a solid line 118a, the temperature of the point (D2) after the introduction of the pressurising gas exhibits a behaviour indicated by a solid line 117a, and the temperature difference (T₄₁) between the point (C2) and the point (D2) is about 3 degrees C which is remarkably small value compared with the prior art method (12 degrees C).

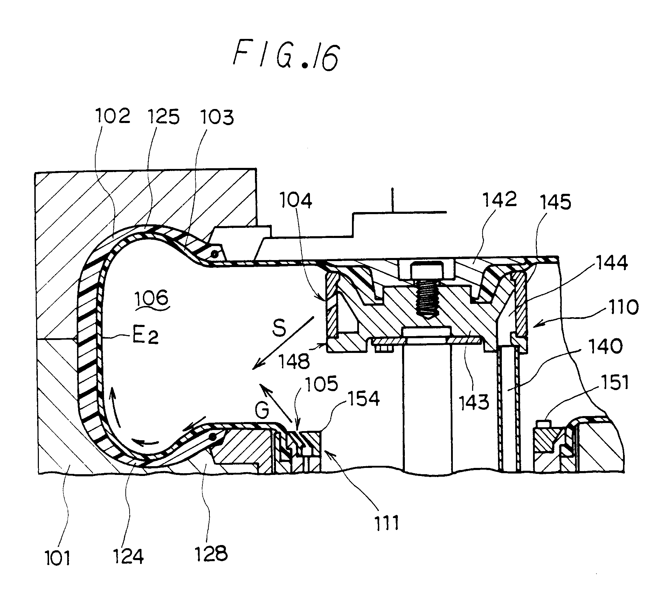

Figure 16 shows a different embodiment in which the heating medium from the supply opening 104 is blown further downwardly compared with the embodiment shown in Figure 13, so as to supply the heating medium toward the lower sidewall 124 of the tyre 102. Since the embodiment of Figure 16 is similar to the embodiment of Figure 13 except for the above-mentioned feature, a further explanation is omitted.

In the embodiment of Figure 16, the heating medium flows as a jet, as shown by an arrow in Figure 16, through the lower bead portion 128 to the lower sidewall 124, and further toward the lower portion of the equator (E2) of the tyre. This heating medium stream blows off and pushes away the accumulated condensate liquid at the lower sidewall 124. Thus insufficient heating of the lower sidewall 124 due to the accumulated condensate is prevented.

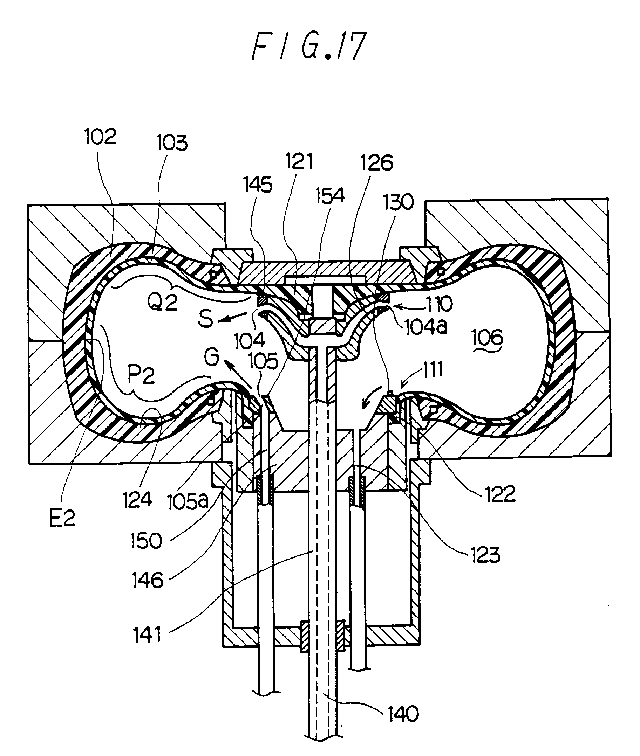

Figure 17 shows another different embodiment using a rolling-in-bladder type vulcanising apparatus, in which a supply passage 140 for the heating medium (steam) is located in a centre post 141, and an upper bladder holder portion 110 has a plurality of radially disposed branch passages 126, the branch passages 126 being in contact and communication with the heating medium supply passage 140.

To end openings of the branch passages 126, a heating medium supply nozzle 13445 having a ring shape is fastened detachably. A heating medium supply opening 104 of the supply nozzle 145 is directed to the inclined downward direction in order to supply the heating medium toward the equator (E2) (the tread centre).

In addition, it is preferable to incline each heating medium supply path 104a of the supply opening 104 relative to the radial direction in order to make the injected medium such as steam flow circularly around the circumferential direction in the inner space 106 of the tyre.

The bagwell 146 has a pressurising medium supply passage 150 and an outlet passage 123 for condensate liquid discharging.

To the end opening of the pressurising medium supply passages 150, a heating medium supply nozzle 154 having a ring shape is fastened detachably. The numeral 130 indicates a fastening bolt. The supply nozzle 154 has a plurality of pressurising medium supply openings 105 disposed at predetermined intervals along the circumferential direction, the supply openings 105 being capable of blowing the pressurising medium towards an upper sidewall 125 of the tyre 102.

In this connection, by inclining the direction of the pressurising medium supply paths 105a relative to the radial direction, the pressurising medium flows circularly around the circumferential direction in the inner space 106 of the tyre.

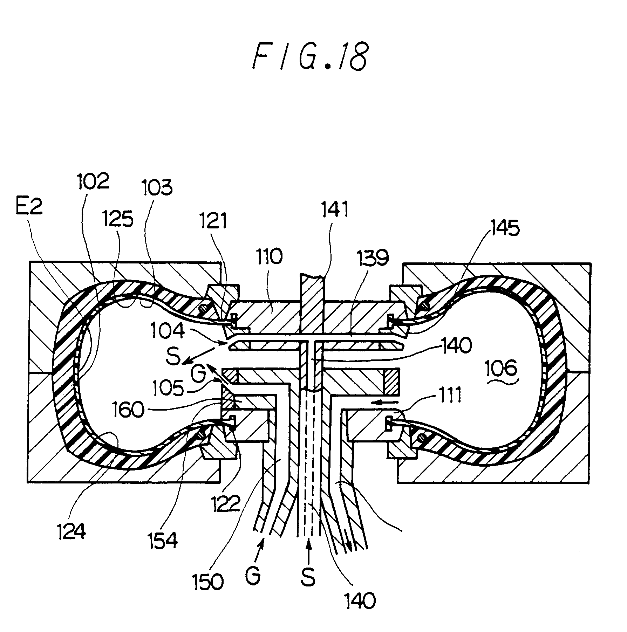

Figure 18 shows another different embodiment in which a vulcanising apparatus of the so-called Bag-O-Matic (BOM) type is used. In this apparatus a heating medium (steam) supply passage 140 is located in a centre post 141, and an upper bladder holder portion 110 has a plurality of radially disposed branch passages 139, the branch passages 139 being in contact and communication with the heating medium supply passage 140. The end openings of the branch passages 139, a heating medium supply nozzle 145 having a ring shape is fastened detachably by means of bolts omitted from the drawings. A heating medium supply opening 104 of the supply nozzle 145 is directed to the inclined downward direction, for example toward the equator (E2) of the tyre or neighbourhood of its lower portion. Since the supply nozzle 145 is of a removably type, a supply nozzle 145 having the most desirable openings, with regard to the direction, diameter and number, can be attached conformably with the shape and the size of the tyre.

With respect to the pressurising medium (gas), a pressurising medium supply passage 150 is located in a support (a hub) 160 of a lower bladder holder portion 111, and a plurality of pressurising medium supply openings 105 communicating with the supply passage 150 are disposed in directions toward the upper region of the vulcanising chamber, for example toward an upper sidewall 125. The supply openings 105 are formed in a pressurising medium supply nozzle 154 which is fastened removably to the support 160 by means of bolts omitted in the drawing. Therefore, a supply nozzle 154 having supply openings 105 in the most desirable direction, diameter and number can be attached according to the shape and the size of the tyre.

Also in this case, by injecting the pressurising medium in a direction inclined relative to the radial direction, the pressurising medium flows circularly around the circumferential direction in the inner space 106 of the vulcanising chamber and provides effective mixing with the remaining steam.

The support 160 of the lower bladder holder portion 111 has an outlet passage 109 for steam and gas, and the upper end of the outlet passage 109 extends in the radial outward direction, an open end of which is located at one position in the inner space 106 of the tyre.

According to the present invention, a construction is provided in which the pressurising medium (gas) is supplied from the lower position of the centre of the vulcanising chamber toward the upper region of the vulcanising chamber independently of the supply position or the supply direction of the heating medium (steam). The meaning of the term "lower position of the centre of the vulcanising chamber" includes, as previously mentioned, the upper end of the bagwell 146 in case of the rolling-in-bladder type vulcanising apparatus as shown in Figure 13 and Figure 17. That is, in such an apparatus a pressurising medium supply nozzle 154 is removably attached to the upper end of the bagwell 146, and the supply nozzle 154 has along its circumferential direction a plurality of pressurising medium supply openings 105 directed to the region (Q2) ranging from the portion above the centre of the vulcanising chamber to the upper sidewall 125 of the tyre 102. In this connection, it is preferable to locate the supply opening 105 at the same height as or slightly lower than the upper end of the lower bead portion 128 of the tyre 102, and therefore, in the illustrated embodiment the supply openings 105 are located slightly lower than the upper end of the bead portion 128.

Therefore, the pressurising gas is directly supplied right across the inner space 106 of the tyre and the gas travels a long distance in this space, so that the mixing effect with the remaining steam is enhanced and the temperature difference within the inner space 106 of the tyre is rectified.

In the Bag-O-Matic type vulcanisation apparatus as shown in Figure 18, the term "lower position of the centre of the vulcanising chamber" indicates, as previously mentioned, the upper position of the support 160 of the lower bladder holder portion 111. That is, in such an apparatus a pressurising medium supply nozzle 154 is removably attached and the supply nozzle 154 has along its circumferential direction a plurality of pressurising medium supply openings 105 directed to the previously mentioned region (Q2).

Therefore, also in this embodiment similarly to the embodiments of Figure 13 and Figure 17, the pressurising gas travels a long distance within the inner space 106, so that the temperature difference within the inner space 106 of the tyre is rectified.

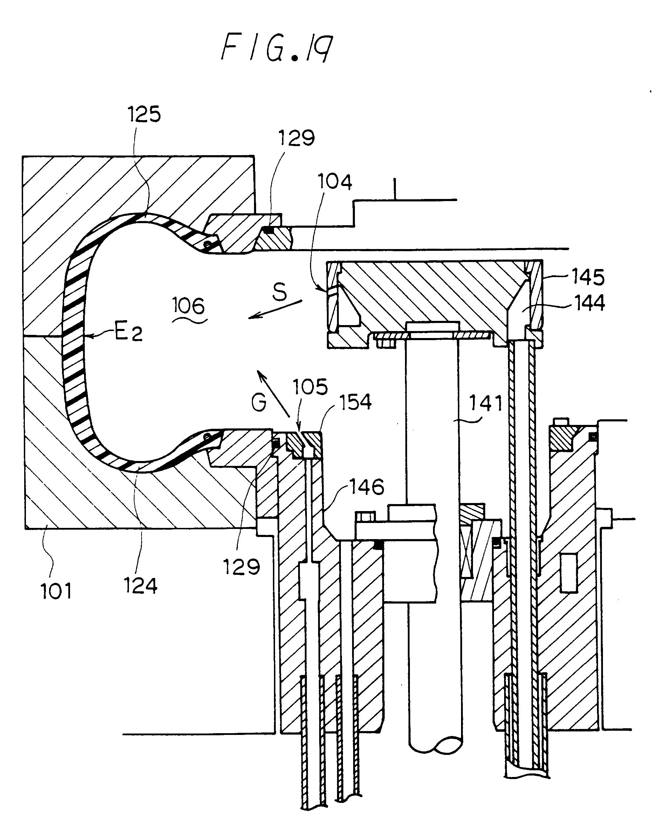

It is a matter of course that the present invention can be applied to a bladderless type apparatus, as shown in Figure 19, in which a bladder is not employed. In that case, seal rings 129, 129 are to be employed as shown in Figure 19.

With respect to the heating medium supply assembly in Figure 19, a block is attached to the upper end of a centre post 141 and a ring-shaped heating medium supply nozzle 145 is attached to the block so that an annular space 144 is formed. A heating medium supply passage is connected to the annular space 144 and heating medium supply openings 104 are formed in the supply nozzle 145.

With respect to the pressurising medium supply assembly in Figure 19, a pressurising medium supply nozzle 154 is attached to the upper portion of a bagwell 146 and a pressuring medium supply passage is connected to the supply nozzle 145.

Thus, the heating medium is supplied downwardly from the supply openings at the upper position, while the pressurising medium is supplied upwardly from the supply openings at the lower position.

It should be noted that the present invention is not limited to the specific embodiments above-mentioned, and further modification, for example in Figure 13 an employment of a construction wherein a heating medium supply passage 40 is located in a centre post 141, can be freely made without departing from the spirit or the scope of the present invention.

The present invention described also provides the following advantageous effects.

In accordance with a method wherein the heating medium is blown and supplied from the upper position at the centre of the vulcanising chamber towards the lower region of the vulcanising chamber, while the pressurising medium is blown and supplied from the lower position of the centre of the vulcanising chamber toward the upper region of the vulcanising chamber, the condensate liquid due to the condensation of the heating medium accumulated at the lower sidewall 124 of the elastomer article is forcibly discharged by the jet of the heating medium stream and consequently the heating condition in the elastomer product becomes uniform. Therefore, uniform vulcanising is attained and the product quality in terms of uniformity can be improved. Especially, the product quality can be further improved by employing a method wherein the heating medium is supplied from the upper bladder holder portion, or a method wherein the heating medium is blown toward the lower region, the lower region being the region (P2) ranging from the equator (E2) of the elastomer article or its neighbourhood to the lower sidewall or its neighbourhood, and the pressurising medium is blown toward the upper region, the upper region being the region (Q2) ranging from the portion above the centre of the vulcanising chamber to the upper sidewall portion (125) of the elastomer article.

The lower temperature pressurising gas is supplied upwardly from a lower position at the centre of the vulcanising chamber, with respect to the method wherein the heating medium is blown and supplied from the upper position of the centre of the vulcanising chamber towards the lower region of the vulcanising chamber, while the pressurising medium is blown and supplied from the lower position of the centre of the vulcanising chamber toward the upper region of the vulcanising chamber, and the method wherein particularly the heating medium is supplied from the upper bladder holder portion and another method wherein the pressurising medium is blown and supplied from the lower position of the centre of the vulcanising chamber toward the upper region of the vulcanising chamber, regardless of the supply position or the supply direction of the heating medium. Thus, an effective mixing for the heating medium (steam) and the pressurising medium (gas) is provided, and accordingly a large temperature difference within the inner space is prevented from occurring and uniform vulcanising can be carried out. The prevention of such temperature difference can also provide shortening of vulcanising period, improvement of productivity, and reduction of energy loss.

By using an apparatus wherein there is formed a heating medium supply opening at the upper position of the centre of the vulcanising chamber for blowing the heating medium toward the lower region of the vulcanising chamber, and there is formed a pressurising medium supply opening at the lower position of the centre of the vulcanising chamber for blowing the pressurising medium toward the upper region of the vulcanising chamber, the same advantageous effects as those of the method mentioned above can be obtained.

Especially, by employing an apparatus wherein the heating medium is supplied from the upper bladder holder portion, or an apparatus wherein the pressurising medium is supplied from the bagwell or the support of the lower bladder holder, such advantageous effects are further enhanced.

Further, by employing an apparatus wherein the heating medium supply openings are formed in a heating medium supply nozzle of a detachable type, or an apparatus wherein the pressurising medium supply openings are formed in a pressurising medium supply nozzle formed in a pressurising medium supply nozzle of the detachable type, the supply nozzles 145, 154 can be freely and easily replaced. This allows supply nozzles having suitable directions in conformance with the shape and the size of the elastomer article to be easily attached, and therefore the heating medium and the pressurising medium can be supplied in the optimum direction and in the optimum amount.

## Claims

1. A method for vulcanising an elastomer product (2) including a heating step wherein an elastomer product (2) is placed in a vulcanising chamber formed in a mould (1,101), a heating medium (S) at a certain pressure is blown and supplied from an upper position at the centre of said vulcanising chamber to heat and pressurise said elastomer product (2) until said elastomer product (2) reaches a prespecified temperature or for a prespecified period of time, said heating medium supply is stopped and inert gas (G) as a pressurising medium at a pressure not lower than said heating medium supply pressure is blown and supplied from a lower position at the centre of said vulcanising chamber towards an upper region of said vulcanising chamber until the end of the heating step, and a discharging step subsequent to said heating step wherein said heating medium (S) and said pressurising medium (G) are discharged to complete the vulcanising.

2. A method according to claim 1 characterised in that the heating medium (S) is blown in a horizontal direction.

3. A method according to claim 1 or 2 characterised in that the heating medium (S) is blown towards an equator (E1) of said elastomer product or adjacent thereto in a horizontal direction, while said pressurising medium (G) is blown towards said upper region and said upper region is a region (Q1) ranging from a portion above the centre of said vulcanising chamber to an upper sidewall portion (25) of said elastomer product (2).

4. A method according to claim 1 characterised in that said heating medium (S) is blown and supplied from the upper position of said vulcanising chamber towards a lower region of said vulcanising chamber.

5. A method according to claim 1 characterised in that said heating medium (S) is blown towards a lower region (P2) ranging from an equator (E2) of said elastomer product or adjacent thereto to a lower sidewall or adjacent thereto and said pressurising medium (G) is blown toward said upper region, said upper region being another region (Q2) ranging from a portion above the centre of said vulcanising chamber to an upper sidewall portion (125) of said elastomer product (2).

6. A method according to any of claims 1 to 5 characterised in that condensate (14) accumulated in the bottom of said vulcanising chamber due to condensation of said heating medium (S) is forcibly discharged out of said elastomer product (2) by means of a discharging means.

7. An apparatus for vulcanising an elastomer product (2) comprising a vulcanising chamber wherein the elastomer product (2) is placed formed in a mould (1,101), a heating medium supply opening (4,104) formed at an upper position at the centre of said vulcanising chamber for blowing a heating medium (S) at a certain pressure in a horizontal direction or towards a lower region of said vulcanising chamber to heat and pressurise said elastomer product (2) until said elastomer product (2) reaches a prespecified temperature or for a prespecified period of time when said heating medium supply is stopped and in inert gas as a pressurising medium (G) at a pressure not lower than said heating medium supply pressure is supplied to said vulcanising chamber via a pressuring medium supply opening (1,105) formed at a lower position at the centre of said vulcanising chamber for blowing said pressurising medium towards an upper region of said vulcanising chamber and the pressurising medium (G) is supplied to said vulcanising chamber until the end of its heating period and the temperature of said elastomer product (2) is maintained at said prespecified temperature during the heating period.

8. An apparatus according to claim 7 characterised in that said upper position at the centre of said vulcanising chamber is an upper bladder holder portion (10,110).

9. An apparatus according to claim 7 or 8 characterised in that said lower position at the centre of said vulcanising chamber is a bagwell (46,146) or a support (60,160) of a lower bladder holder (11,111).

10. An apparatus according to claim 7, 8 or 9 characterised in that said heating medium supply opening (1,104) is formed in a heating medium supply nozzle (45,145) of a detachable type.

11. An apparatus according to any of claims 7 to 10 characterised in that said pressurising medium supply opening (5,105) is formed in a pressurising medium supply nozzle (54,154) of a detachable type.

12. An apparatus according to any of claims 7 to 11 characterised by a discharging means (13) for forcibly discharging condensate (14) accumulated in the bottom of said vulcanising chamber due to condensation of said heating medium out of said elastomer product.

## Patentansprüche

1. Ein Verfahren zur Vulkanisierung eines Elastomerproduktes (2), mit einem Erwärmungsschritt, worin ein Elastomerprodukt (2) in einer Vulkanisierkammer plaziert wird, die in einer Form (1, 101) gebildet ist, ein erwärmendes Medium (S) bei einem bestimmten Druck aus einer oberen Position bei der Mitte der Vulkanisierkammer geblasen und geliefert wird, um das Elastomerprodukt (2) zu erwärmen und unter Druck zu setzen, bis das Elastomerprodukt (2) eine vorbestimmte Temperatur erreicht, oder für eine vorbestimmte Zeitspanne, die Lieferung des erwärmenden Mediums beendet wird, und Inertgas (G) als ein unter Druck setzendes Medium bei einem Druck nicht geringer als der Lieferdruck des erwärmenden Mediums aus einer unteren Position bei der Mitte der Vulkanisierkammer in Richtung auf einen oberen Bereich der Vulkanisierkammer geblasen und geliefert wird, bis zum Ende des Erwärmungsschrittes, und einem Entladungsschritt nachfolgend dem Erwärmungsschritt, worin das erwärmende Medium (S) und das unter Druck setzende Medium (G) entladen werden, um die Vulkanisierung abzuschließen.

2. Ein Verfahren nach Anspruch 1, dadurch gekennzeichnet, daß das erwärmende Medium (S) in einer horizontalen Richtung geblasen wird.

3. Ein Verfahren nach Anspruch 1 oder 2, dadurch gekennzeichnet, daß das erwärmende Medium (S) in Richtung auf einen Äquator (E1) des Elastomerproduktes oder benachbart dazu in einer horizontalen Richtung geblasen wird, während das unter Druck setzende Medium (G) in Richtung auf den oberen Bereich geblasen wird und der obere Bereich ein Bereich (Q1) ist, der von einem Teil oberhalb der Mitte der Vulkanisierkammer zu einem oberen Seitenwandteil (25) des Elastomerproduktes (2) reicht.

4. Ein Verfahren nach Anspruch 1, dadurch gekennzeichnet, daß das erwärmende Medium (S) aus der oberen Position der Vulkanisierkammer in Richtung auf einen unteren Bereich der Vulkanisierkammer geblasen und geliefert wird.

5. Ein Verfahren nach Anspruch 1, dadurch gekennzeichnet, daß das erwärmende Medium (S) in Richtung auf einen unteren Bereich (P2) geblasen wird, der von einem Äquator (E2) des Elastomerproduktes oder benachbart dazu zu einer unteren Seitenwand oder benachbart dazu reicht, und das untere Druck setzende Medium (G) in Richtung auf den oberen Bereich geblasen wird, wobei der obere Bereich ein anderer Bereich (Q2) ist, der von einem Teil oberhalb der Mitte der Vulkanisierkammer zu einem oberen Seitenwandteil (125) des Elastomerproduktes (2) reicht.

6. Ein Verfahren nach einem der Ansprüche 1 bis 5, dadurch gekennzeichnet, daß Kondensat (14) in dem Boden der Vulkanisierkammer aufgrund der Kondensation des erwärmenden Mediums (S) zwangsweise aus dem Elastomerprodukt (2) vermittels eines Entladungsmittels entladen wird.

7. Eine Vorrichtung zur Vulkanisierung eines Elastomerproduktes (2) mit einer Vulkanisierkammer, worin das Elastomerprodukt (2) plaziert ist, die in einer Form (1, 101) gebildet ist, einer Lieferöffnung (4, 104) für erwärmendes Medium, die bei einer oberen Position bei der Mitte der Vulkanisierkammer zum Blasen eines erwärmenden Mediums (S) bei einem bestimmten Druck in einer horizontalen Richtung oder in Richtung auf einen unteren Bereich der Vulkanisierkammer geblasen wird, um das Elastomerprodukt (2) zu erwärmen und unter Druck zu setzen, bis das Elastomerprodukt (2) eine vorbestimmte Temperatur erreicht oder für eine vorbestimmte Zeitspanne, wenn die Lieferung des erwärmenden Mediums gestoppt wird und ein Inertgas als ein unter Druck setzendes Medium (G) bei einem Druck nicht geringer als der Lieferdruck des erwärmenden Mediums an die Vulkanisierkammer über eine Lieferöffnung (1, 105) für unter Druck setzendes Medium geliefert wird, die bei einer unteren Position bei der Mitte der Vulkanisierkammer zum Blasen des unter Druck setzenden Mediums in Richtung auf einen oberen Bereich der Vulkanisierkammer gebildet ist, und das unter Druck setzende Medium (G) an die Vulkanisierkammer geliefert wird, bis zum Ende seiner Erwärmungsperiode und die Temperatur des Elastomerproduktes (2) ist auf der vorbestimmten Temperatur während der Erwärmungsperiode aufrechterhalten.

8. Eine Vorrichtung nach Anspruch 7, dadurch gekennzeichnet, daß die obere Position bei der Mitte der Vulkanisierkammer ein oberer Blasenhalterteil (10, 110) ist.

9. Eine Vorrichtung nach Anspruch 7 oder 8, dadurch gekennzeichnet, daß die untere Position bei der Mitte der Vulkanisierkammer eine Balgaufnahme (46, 146) oder ein Träger (60, 160) eines unteren Blasenhalters (11, 111) ist.

10. Eine Vorrichtung nach Anspruch 7, 8 oder 9, dadurch gekennzeichnet, daß die Lieferöffnung (1, 104) für erwärmendes Medium in einer Lieferdüse (45, 145) eines abnehmbaren Typus gebildet ist.

11. Eine Vorrichtung nach einem der Ansprüche 7 bis 10, dadurch gekennzeichnet, daß die Lieferöffnung (5, 105) des unter Druck setzenden Mediums zu einer Lieferdüse (54, 154) für unter Druck setzendes Medium eines abnehmbaren Typus gebildet ist.

12. Eine Vorrichtung nach einem der Ansprüche 7 bis 11, gekennzeichnet durch ein Entladungsmittel (13) zum zwangsweisen Entladen von Kondensat (14), das in dem Boden der Vulkanisierkammer aufgrund der Kondensation des erwärmenden Mediums angesammelt ist, aus dem Elastomerprodukt.

## Revendications

1. Procédé de vulcanisation d'un produit élastomère (1), comprenant une étape de chauffage dans laquelle un produit élastomère (2) est placé dans une chambre de vulcanisation formée dans un moule (1, 101), un fluide de chauffage (S) à une certaine pression est soufflé et transmis d'une position supérieure au centre de la chambre de vulcanisation afin qu'il chauffe et mette sous pression le produit élastomère (2) jusqu'à ce que ce produit élastomère (2) atteigne une température préalablement spécifiée ou pendant une période préalablement spécifiée, l'alimentation en fluide de chauffage est interrompue et un gaz inerte (G) formant un fluide de mise sous pression à une pression qui n'est pas inférieure à celle d'alimentation en fluide de chauffage est soufflé et transmis d'une position inférieure au centre de la chambre de vulcanisation vers une région supérieure de la chambre de vulcanisation jusqu'à la fin de l'étape de chauffage, et une étape d'évacuation suivant l'étape de chauffage dans laquelle le fluide de chauffage (S) et le fluide de mise sous pression (G) sont évacués afin que la vulcanisation soit terminée.

2. Procédé selon la revendication 1, caractérisé en ce que le fluide de chauffage (S) est soufflé en direction horizontale.

3. Procédé selon la revendication 1 ou 2, caractérisé en ce que le fluide de chauffage (S) est soufflé vers l'équateur (E1) du produit élastomère ou près de l'équateur en direction horizontale, alors que le fluide de mise sous pression (G) est soufflé vers la région supérieure, et la région supérieure est une région (Q1) comprise entre une partie qui se trouve au-dessus du centre de la chambre de vulcanisation et une partie du flanc supérieur (25) du produit élastomère (2).

4. Procédé selon la revendication 1, caractérisé en ce que le fluide de chauffage (S) est soufflé et transmis d'une position supérieure de la chambre de vulcanisation vers une région inférieure de la chambre de vulcanisation.

5. Procédé selon la revendication 1, caractérisé en ce que le fluide de chauffage (S) est soufflé vers une région inférieure (P2) comprise entre un équateur (E2) du produit élastomère ou la proximité de celui-ci et un flanc inférieur ou la proximité de celui-ci, et le fluide de mise sous pression (G) est soufflé vers la région supérieure, la région supérieure étant une autre région (Q2) allant d'une partie qui se trouve au-dessus du centre de la chambre de vulcanisation à une partie de flanc supérieur (125) du produit élastomère (2).

6. Procédé selon l'une quelconque des revendications 1 à 5, caractérisé en ce que le condensat (14) accumulé à la partie inférieure de la chambre de vulcanisation par condensation du fluide de chauffage (S) est évacué à force du produit élastomère (2) par un dispositif d'évacuation.

7. Appareil de vulcanisation d'un produit élastomère (2) comprenant une chambre de vulcanisation dans laquelle le produit élastomère (2) est placé, cette chambre étant formée dans un moule (1, 101), une ouverture (4, 104) d'alimentation en fluide de chauffage formée à une position supérieure au centre de la chambre de vulcanisation afin qu'un fluide de chauffage (S) à une certaine pression soit soufflé en direction horizontale ou vers une région inférieure de la chambre de vulcanisation et que le produit élastomère (2) soit chauffé et mis sous pression jusqu'à ce que le produit élastomère (2) atteigne une température spécifiée préalablement ou pendant une période spécifiée préalablement, la transmission du fluide de chauffage étant interrompue et un gaz inerte, formant un fluide de mise sous pression (G) dont la pression n'est pas inférieure a la pression d'alimentation du fluide de chauffage, est transmis à la chambre de vulcanisation par une ouverture (1, 105) d'alimentation en fluide de mise sous pression formée à une position inférieure au centre de la chambre de vulcanisation afin que le fluide de mise sous pression soit soufflé vers une région supérieure de la chambre de vulcanisation, et que le fluide de mise sous pression (G) soit transmis à la chambre de vulcanisation jusqu'à la fin de sa période de chauffage, et la température du produit élastomère (2) est maintenue à la température spécifiée préalablement pendant la période de chauffage.

8. Appareil selon la revendication 7, caractérisé en ce que ladite position supérieure au centre de la chambre de vulcanisation est formée par une partie supérieure (10, 110) de maintien d'une vessie.

9. Appareil selon la revendication 7 ou 8, caractérisé en ce que la disposition inférieure au centre de la chambre de vulcanisation est un logement de poche (46, 146) ou un support (60, 160) d'un organe inférieur de maintien de vessie (11, 111).

10. Appareil selon la revendication 7, 8 ou 9, caractérisé en ce que l'ouverture (1, 104) d'alimentation en fluide de chauffage est formée dans une buse (45, 145) d'alimentation en fluide de chauffage de type amovible.

11. Appareil selon l'une quelconque des revendications 7 à 10, caractérisé en ce que l'ouverture (5, 105) d'alimentation en fluide de mise sous pression est formée dans une buse (54, 154) d'alimentation en fluide de mise sous pression de type amovible.

12. Appareil selon l'une des revendications 7 à 11, caractérisé par un dispositif (13) d'évacuation à force d'un condensat (14) qui s'est accumulé à la partie inférieure de la chambre de vulcanisation par suite de la condensation du fluide de chauffage, vers l'extérieur du produit élastomère.
